# EUROPEAN PATENT APPLICATION

(11) **EP 4 826 534 A1**
(43) Date of publication of application: **21.10.2026**
(21) Application number: 24918011.8
(22) Date of filing: 05.08.2024
(51) Int. Cl.: G06F 9/50

(54) **DATA PROCESSING METHOD AND APPARATUS, AND DEVICE**

(30) Priority: 15.01.2024 CN 202410059641
(71) Applicant: Huawei Technologies Co., Ltd., Shenzhen, Guangdong 518129 (CN)
(72) Inventor: ZHAO, Yu, Shenzhen, Guangdong 518129 (CN); LI, Ke, Shenzhen, Guangdong 518129 (CN); QI, Le, Shenzhen, Guangdong 518129 (CN); LI, Hao, Shenzhen, Guangdong 518129 (CN)
(74) Representative: Pfenning, Meinig & Partner mbB
(86) International application number: PCT/CN2024/109757
(87) International publication number: WO 2025/152399

(57) **Abstract**

A data processing method includes: A consumer thread in N consumer threads processes data sent by at least one of M producers, where data sent by one producer is processed by one consumer thread, and M is an integer greater than or equal to N; and when a processing unit corresponding to a first consumer thread that processes data sent by a first producer among the M producers satisfies a condition, a second consumer thread among the N consumer threads takes over, from the first consumer thread, processing of the data sent by the first producer. This method can reduce thread scheduling overheads.

## Description

This application claims priority to Application No. 202410059641.8, filed with the China National Intellectual Property Administration on January 15, 2024 and entitled "DATA PROCESSING METHOD AND APPARATUS, AND DEVICE", which is incorporated herein by reference in its entirety.

### TECHNICAL FIELD

This application relates to the field of computer technologies, and in particular, to a data processing method and apparatus, and a device.

### BACKGROUND

Compute devices such as servers concurrently processes a plurality of services. To reduce mutual interference (for example, contention for compute resources) among different services, different core groups are allocated to the different services. A core group allocated to a service includes one or more computing cores (core), and the computing cores in the core group are dedicated to processing the service.

In some scenarios, a quantity of computing cores in a core group may change. For example, service A1 is under high pressure, and a core group allocated to the service A1 has a heavy load. In this case, one or more cores in the core group with lower loads need to be migrated to the core group allocated to the service A1. For another example, a service A2 is under low pressure, and a core group allocated to the service A2 has a lighter load. In this case, some computing cores in the core group need to be powered off to reduce power consumption.

The migration of computing cores out of a core group or power-off of some computing cores in a core group increases scheduling overheads of a thread (thread) in the core group, thereby affecting performance of the core group.

### SUMMARY

This application provides a data processing method and apparatus, and a device, to reduce thread scheduling overheads and improve performance of a processing unit cluster.

According to a first aspect, a data processing method is provided, and is applied to a data processing apparatus. The apparatus includes N processing units, where N is an integer greater than or equal to 1. The N processing units are in one-to-one correspondence with N consumer threads, and a consumer thread runs on a processing unit corresponding to the consumer thread. The method includes: A consumer thread among the N consumer threads processes data sent by at least one of M producers, where data sent by one producer is processed by one consumer thread, and M is an integer greater than or equal to N; and when a processing unit corresponding to a first consumer thread that processes data sent by a first producer among the M producers satisfies a condition, a second consumer thread among the N consumer threads takes over, from the first consumer thread, processing of the data sent by the first producer.

In this method, one processing unit runs one consumer thread, one consumer thread may process, at a same moment, data sent by one or more producers, and data sent by one producer is processed by one consumer thread at a same moment.

In other words, in this method, a one-to-one correspondence is always maintained between consumer threads and processing units, and a thread is not switched between processing units. When producers and processing units are not in one-to-one correspondence, or when producers and consumer threads are not in one-to-one correspondence, producers corresponding to a processing unit may be switched by switching producers corresponding to a consumer thread. In this way, load balancing between processing units can be implemented without a kernel mode operation, to avoid large overheads of the kernel mode operation and improve data processing performance.

In a possible implementation, the processing unit corresponding to the first consumer thread satisfying the condition includes any one of the following: the processing unit corresponding to the first consumer thread is powered off, the processing unit corresponding to the first consumer thread is faulty, and the processing unit corresponding to the first consumer thread is configured to process data sent by a producer other than the M producers.

In other words, when a quantity of processing units configured to process the data sent by the M producers decreases, a remaining processing unit may take over, from a reduced processing unit, processing of the data sent by a corresponding producer, to ensure that data sent by each of the M producers is processed.

In a possible implementation, a consumer thread other than the first consumer thread among the N consumer threads forms a first directed circular queue. The method further includes: when a load of a processing unit corresponding to the second consumer thread is greater than a load of a processing unit corresponding to a third consumer thread, and the second consumer thread is configured to process data sent by at least two of the M producers, the third consumer thread takes over, from the second consumer thread, processing of data sent by a part of the at least two producers, where in the first circular queue, the second consumer thread is a next consumer thread of the third consumer thread.

In this implementation, the N consumer threads form a directed circular queue. A current consumer thread in the queue may take over, from a next consumer thread, processing of data sent by a corresponding producer, and does not take over, from another consumer thread, processing of data sent by a corresponding producer. In addition, the next consumer thread of the current consumer thread does not take over, from the current consumer thread, processing of data sent by the corresponding producer. In this way, according to such a directed circular queue mechanism, it ensures a unidirectional flow of a producer between consumer threads, to greatly reduce lock conflicts during switching of a producer between consumer threads.

In a possible implementation, the first consumer thread is configured to process both the data sent by the first producer and data sent by a second producer among the M producers; and the processing unit corresponding to the first consumer thread satisfying the condition includes: a load of the processing unit corresponding to the first consumer thread is greater than a load of a processing unit corresponding to the second consumer thread.

When a current consumer thread processes data sent by two or more producers, a consumer thread run on a processing unit with a smaller load in the N processing units may take over, from the current consumer thread, processing of data sent by a part of the two or more producers, to reduce a load of a processing unit in which the current consumer thread is located, and implement load balancing between the N processing units.

In a possible implementation, the N consumer threads form a second directed circular queue, and in the second directed circular queue, the first consumer thread is a next consumer thread of the second consumer thread.

In this implementation, the N consumer threads form a directed circular queue. A current consumer thread in the queue may take over, from a next consumer thread, processing of data sent by a corresponding producer, and does not take over, from another consumer thread, processing of data sent by a corresponding producer. In addition, the next consumer thread of the current consumer thread does not take over, from the current consumer thread, processing of data sent by the corresponding producer. In this way, according to such a directed circular queue mechanism, it ensures a unidirectional flow of a producer between consumer threads, to greatly reduce lock conflicts during switching of a producer between consumer threads.

In a possible implementation, a storage space corresponding to the producer is configured to store data sent by the producer, and that the consumer thread processes data sent by at least one of the M producers includes: The consumer thread is configured to: obtain data from a storage space corresponding to the at least one producer, and process the obtained data.

According to a second aspect, a data processing apparatus is provided. The apparatus includes N processing units, where N is an integer greater than or equal to 1. The N processing units are in one-to-one correspondence with N consumer threads, and a consumer thread runs on a processing unit corresponding to the consumer thread. A consumer thread among the N consumer threads is configured to process data sent by at least one of M producers, where data sent by one producer is processed by one consumer thread, and M is an integer greater than or equal to N; and when a processing unit corresponding to a first consumer thread that processes data sent by a first producer among the M producers satisfies a condition, a second consumer thread among the N consumer threads is configured to take over, from the first consumer thread, processing of the data sent by the first producer.

In a possible implementation, the processing unit corresponding to the first consumer thread satisfying the condition includes any one of the following: the processing unit corresponding to the first consumer thread is powered off, the processing unit corresponding to the first consumer thread is faulty, and the processing unit corresponding to the first consumer thread is configured to process data sent by a producer other than the M producers.

In a possible implementation, a consumer thread other than the first consumer thread among the N consumer threads forms a first directed circular queue. When a load of a processing unit corresponding to the second consumer thread is greater than a load of a processing unit corresponding to a third consumer thread, and the second consumer thread is configured to process data sent by at least two of the M producers, the third consumer thread is configured to take over, from the second consumer thread, processing of data sent by a part of the at least two producers, where in the first circular queue, the second consumer thread is a next consumer thread of the third consumer thread.

In a possible implementation, the first consumer thread is configured to process both the data sent by the first producer and data sent by a second producer among the M producers; and the processing unit corresponding to the first consumer thread satisfying the condition includes: a load of the processing unit corresponding to the first consumer thread is greater than a load of a processing unit corresponding to the second consumer thread.

In a possible implementation, the N consumer threads form a second directed circular queue, and in the second directed circular queue, the first consumer thread is a next consumer thread of the second consumer thread.

In a possible implementation, a storage space corresponding to the producer is configured to store data sent by the producer, and the consumer thread is configured to: obtain data from a storage space corresponding to the at least one producer, and process the obtained data.

According to a third aspect, a compute device is provided, including the data processing apparatus provided in the second aspect and M producers.

According to a fourth aspect, a computer-readable storage medium is provided, including computer program instructions. When the computer program instructions are executed by a compute device, the compute device performs the method provided in the first aspect.

According to a fifth aspect, a computer program product including instructions is provided. When the instructions are run by a compute device, the compute device is enabled to perform the method provided in the first aspect.

For beneficial effects of the second aspect to the fifth aspect, refer to the foregoing descriptions of the beneficial effects of the first aspect. Details are not described herein again.

### BRIEF DESCRIPTION OF DRAWINGS

FIG. 1 is a diagram of scheduling of computing cores in a core group;
FIG. 2 is a diagram of a system architecture according to an embodiment of this application;
FIG. 3 is a diagram of a system architecture according to an embodiment of this application;
FIG. 4 is a diagram of a change of a quantity of processing units in a processing unit cluster according to an embodiment of this application;
FIG. 5 is a flowchart of a data processing method according to an embodiment of this application;
FIG. 6 is a diagram of a data processing method according to an embodiment of this application;
FIG. 7 is a diagram of a producer-based scheduling policy according to an embodiment of this application;
FIG. 8 is a diagram of a directed circular queue according to an embodiment of this application;
FIG. 9 is a diagram of a data processing method according to an embodiment of this application;
FIG. 10 is a diagram of a directed circular queue according to an embodiment of this application;
FIG. 11 is a diagram of a structure of a data processing apparatus according to an embodiment of this application; and
FIG. 12 is a diagram of a structure of a compute device according to an embodiment of this application.

### DESCRIPTION OF EMBODIMENTS

The following describes solutions in embodiments of this application with reference to the accompanying drawings. In embodiments of this application, "a plurality of" means two or more, and "a plurality of types" means two or more types. Terms "first", "second", and the like are merely intended to distinguish between similar objects, and do not need to be used to describe a specific sequence or a quantity of objects.

To facilitate understanding of the solutions provided in embodiments of this application, technical terms that may be used in embodiments of this application are first described.

A processing unit is a computer module, component, or element that has computational power and is configured to perform one or more compute tasks. The processing unit may be a processor (for example, a single-core processor), or may be a computing core in a multi-core processor. The processor may be a central processing unit (CPU), a graphics processing unit (graphics processing unit, GPU), an application-specific integrated circuit (application-specific integrated circuit, ASIC), a neural-network processing unit (neural-network processing unit, NPU), or the like. One processing unit may simultaneously run one or more threads.

A processing unit cluster may also be referred to as a processing unit group, and includes a plurality of processing units. A multi-core processor may be divided into one or more processing unit clusters, and each processing unit cluster includes a plurality of computing cores in the multi-core processor.

A thread (thread) is also referred to as a lightweight process (lightweight process, LWP) sometimes, and is a minimum unit for computing and scheduling in a computer. One thread is run by one processing unit at a same moment.

A consumer thread is a thread that processes data sent by a producer. One consumer thread may include one or more threads. One consumer thread is run by one processing unit at a same moment.

A producer is an entity that produces data and sends the produced data. The producer may be located in a device other than a device on which a consumer thread is located, the producer may also run an application on the device on which the consumer thread is located, or the like.

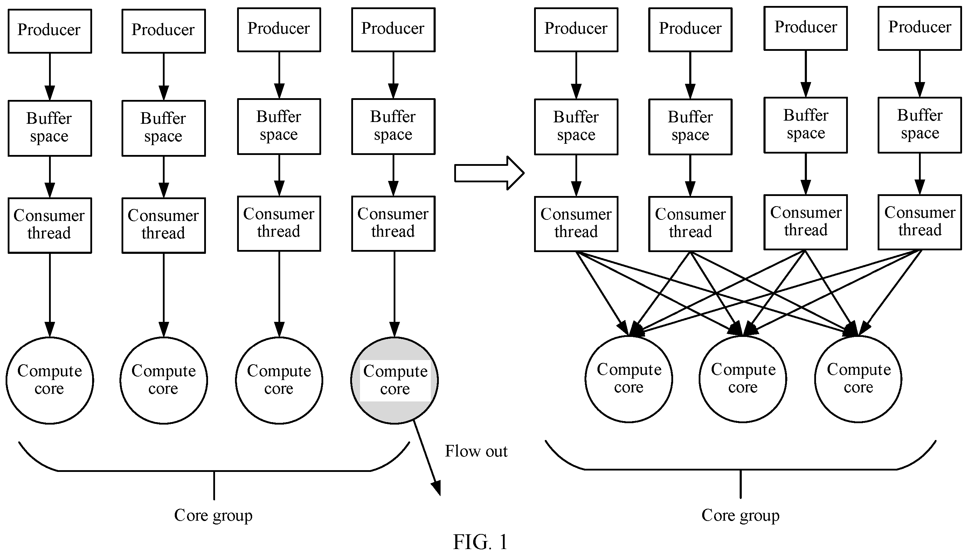

In a related technology, as shown in FIG. 1, a core group includes a plurality of computing cores, and each computing core runs one consumer thread. The consumer thread is bound to a producer. The consumer thread is configured to process data sent by the producer bound to the consumer thread. After at least one computing core in the core group flows out (for example, the one or more computing cores are disabled, or the one or more computing cores are moved to another core group), a consumer thread run on the at least one computing core is executed by a remaining computing core in the core group. Because a quantity of producers does not change, to ensure that remaining computing cores evenly bear production services, a 1:1 correspondence between consumer threads and processing units needs to be broken, and the consumer thread needs to be scheduled between remaining computing cores in the core group. For example, as shown in FIG. 1, a core group including four computing cores processes data sent by four producers. Each computing core runs one consumer thread. The consumer threads and the producers are in a 1:1 binding relationship. One consumer thread processes data sent by one producer. After one computing core flows out of the core group, four consumer threads are run by three processing units, so that one of the computing cores runs two consumer threads. To implement load balancing, the computing core that runs the two consumer threads is frequently adjusted. That is, the consumer threads need to be continuously switched from one processing unit to another processing unit. Switching between the processing units that run the consumer threads involves a kernel (kernel) mode operation. Switching overheads are large, and overall service performance is affected.

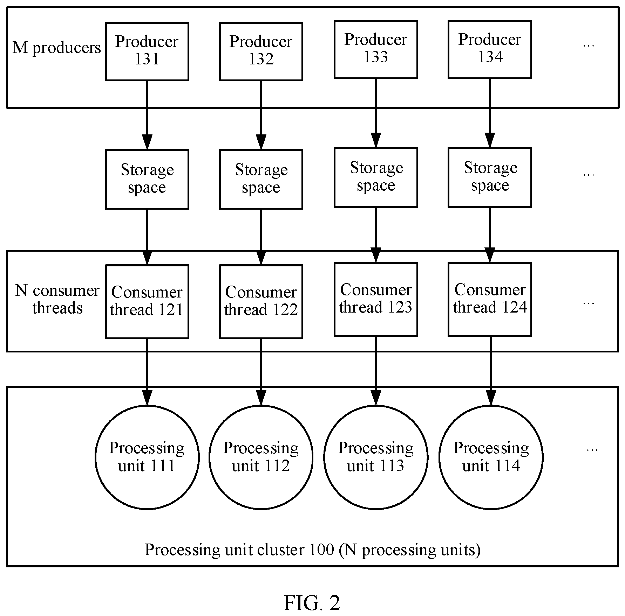

FIG. 2 is a diagram of a system architecture according to an embodiment of this application. As shown in FIG. 2, the system architecture includes a processing unit cluster 100. The processing unit cluster 100 may include N processing units, and the N processing units are in one-to-one correspondence with N consumer threads. That is, in the processing unit cluster 100, the processing units and the consumer threads are in a 1:1 binding relationship. A consumer thread runs on a processing unit corresponding to the consumer thread. N is an integer greater than or equal to 1. For ease of description, it may be set that the N processing units include a processing unit 111, a processing unit 112, a processing unit 113, a processing unit 114, and the like. The processing unit 111 corresponds to a consumer thread 121, the processing unit 112 corresponds to a consumer thread 122, the processing unit 113 corresponds to a consumer thread 123, the processing unit 114 corresponds to a consumer thread 124, and the like.

As shown in FIG. 2, the system architecture includes M producers, and M is an integer greater than or equal to N. The processing unit cluster 100 is configured to process data sent by the M producers. One consumer thread in the processing unit cluster 100 processes data sent by at least one of the M producers. In other words, at a same moment, one consumer thread may process data sent by one or more of the M producers. Data sent by one of the M producers is processed by one consumer thread in the processing unit cluster 100. In other words, at a same moment, data sent by one producer is processed by one consumer thread.

In some embodiments, as shown in FIG. 2, the M producers may include a producer 131, a producer 132, a producer 133, a producer 134, and the like. The consumer thread 121 processes data sent by the producer 131, the consumer thread 122 processes data sent by the producer 132, the consumer thread 123 processes data sent by the producer 133, and the consumer thread 124 processes data sent by the producer 134.

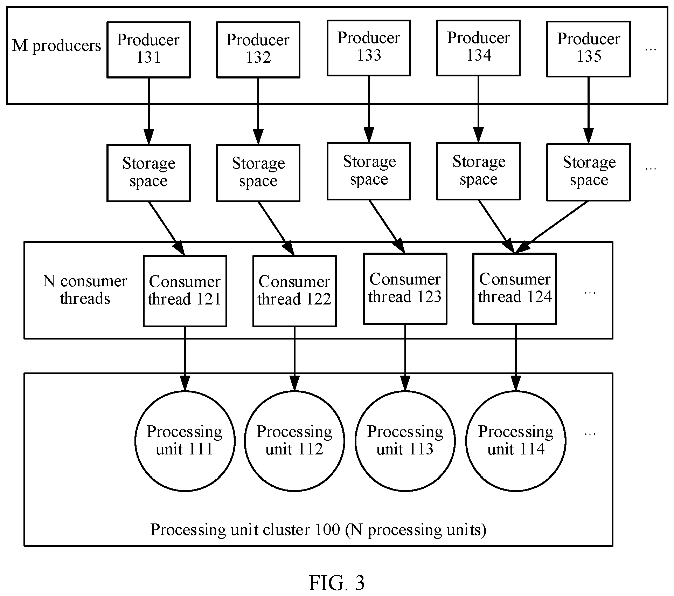

In some embodiments, as shown in FIG. 3, the M producers may include a producer 131, a producer 132, a producer 133, a producer 134, a producer 135, and the like. The consumer thread 121 processes data sent by the producer 131, the consumer thread 122 processes data sent by the producer 132, the consumer thread 123 processes data sent by the producer 133, and the consumer thread 123 processes data sent by the producer 134 and data sent by the producer 135.

In some embodiments, as shown in FIG. 2 or FIG. 3, a producer corresponds to a storage space, and the storage space is configured to store data sent by the producer. A consumer thread obtains the data sent by the producer from the storage space and processes the obtained data. For example, the storage space may be specifically a buffer, also referred to as a buffer space.

To ensure data processing consistency, a same storage space allows only one consumer thread to obtain data from the storage space at a same moment. In other words, data sent by one producer can be processed by only one consumer thread at a same moment. For example, when a consumer thread obtains data from a storage space, the consumer thread applies a lock to the storage space, and the lock is used to prevent another consumer thread from obtaining data from the storage space.

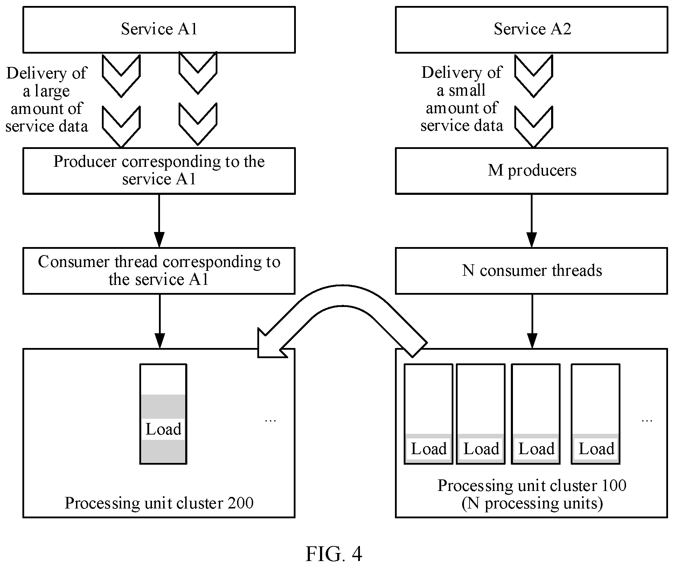

In some scenarios, one or more processing units in the processing unit cluster 100 are no longer configured to process data sent by one or more of the M producers. For example, in a scenario shown in FIG. 4, the M producers are configured to generate and send data based on service data delivered by a service A2. A producer corresponding to a service A1 is configured to generate and send data based on service data delivered by the service A1. The data sent by the producer corresponding to the service A1 is processed by a consumer thread corresponding to the service A1, and the consumer thread of the service A1 runs on a processing unit in a processing unit cluster 200. When a small amount of service data is delivered for the service A2 and a large amount of service data is delivered for the service A1, a load of a processing unit in the processing unit cluster 100 is light, and a load of a processing unit in the processing unit cluster 200 is heavy. In this case, one or more processing units in the processing unit cluster 100 may be moved to the processing unit cluster 200. The one or more processing units are no longer configured to process data sent by corresponding producers in the M producers, but are configured to process the data sent by the producer corresponding to the service A1.

When the one or more processing units in the processing unit cluster 100 are no longer configured to process the data sent by the one or more producers in the M producers, consumer threads that are run by the one or more processing units and are configured to process the data sent by the one or more producers are no longer configured to process the data sent by the one or more producers. The consumer thread may be terminated or may move as the one or more processing units move. The data sent by the one or more producers is processed by a remaining processing unit in the processing unit cluster 100. The data sent by the one or more producers is processed by a consumer thread run by the remaining processing unit in the processing unit cluster 100.

Therefore, when the one or more processing units in the processing unit cluster 100 are no longer configured to process the data sent by the one or more of the M producers, the data sent by the one or more producers is processed by the consumer thread run by the remaining processing unit in the processing unit cluster 100. This does not involve switching of a consumer thread between different processing units, and avoids overheads caused by switching of the consumer thread between the different processing units.

The foregoing example describes the system architecture provided in embodiments of this application. The following describes, with reference to the system architecture, the data processing method provided in embodiments of this application.

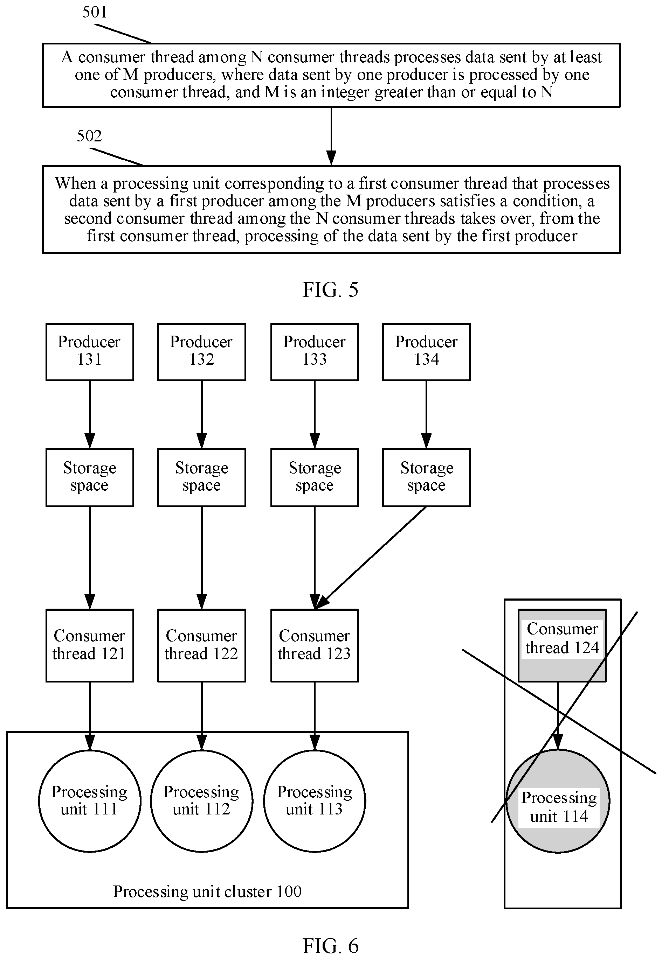

According to the method, a processing unit in a processing unit cluster 100 processes data sent by M producers. As described above, the processing unit cluster 100 includes N processing units, the N processing units are in one-to-one correspondence with N consumer threads, the consumer thread runs on a processing unit corresponding to the consumer thread, and N is an integer greater than or equal to 1. As shown in FIG. 5, the method includes the following steps.

Step 501: A consumer thread among the N consumer threads processes data sent by at least one of the M producers, where data sent by one producer is processed by one consumer thread, and M is an integer greater than or equal to N.

Specifically, one consumer thread may process data sent by one producer. For example, a consumer thread 121 may process data sent by a producer 131. One consumer thread may also simultaneously process data sent by a plurality of producers. For example, a consumer thread 124 may simultaneously process data sent by a producer 134 and data sent by a producer 135.

To ensure data processing consistency, data sent by one producer is processed by one consumer thread at a same moment. When processing the data sent by the producer, the consumer thread may apply a lock to the data sent by the producer, to prevent another consumer thread from processing the data sent by the producer.

In some embodiments, a storage space corresponding to the producer is configured to store the data sent by the producer, and the consumer thread is configured to obtain the data from the storage space and process the obtained data. In an example, the storage space belongs to a buffer, and may also be referred to as a buffer space.

After generating the data, the producer may store the generated data in the storage space corresponding to the producer. The consumer thread configured to process the data sent by the producer obtains the data from the storage space corresponding to the producer, and processes the obtained data.

Step 502: When a processing unit corresponding to a first consumer thread that processes data sent by a first producer among the M producers satisfies a condition, a second consumer thread among the N consumer threads takes over, from the first consumer thread, processing of the data sent by the first producer.

The first consumer thread may be one or more threads in the N consumer threads. Correspondingly, the processing unit corresponding to the first consumer thread is one or more of the N processing units.

When the processing unit corresponding to the first consumer thread satisfies the condition, the processing unit corresponding to the first consumer thread no longer processes the data sent by the first producer, and the first consumer thread no longer processes the data sent by the first producer. The second consumer thread takes over, from the first consumer thread, processing of the data sent by the first producer.

In some embodiments, the processing unit corresponding to the first consumer thread satisfying the condition means that the processing unit corresponding to the first consumer thread no longer processes or is unable to process the data sent by the first producer. In this embodiment, a quantity of processing units in the processing unit cluster 100 that are configured to process the data sent by the M producers decreases. In an example, the processing unit corresponding to the first consumer thread satisfying the condition is specifically: The processing unit corresponding to the first thread is powered off. For example, when a load of a processing unit in the processing unit cluster 100 is small, some processing units in the processing unit cluster 100 may be disabled, and the some processing units include the processing unit corresponding to the first consumer thread. In another example, the processing unit corresponding to the first consumer thread satisfying the condition is specifically: The processing unit corresponding to the first thread is faulty. The processing unit is faulty. As a result, the processing unit cannot normally run the consumer thread, and cannot process the data sent by the first producer. In still another example, that processing corresponding to the first consumer thread satisfies the condition is specifically: The processing unit corresponding to the first consumer thread is configured to process data sent by a producer other than the M producers. For example, in the scenario shown in FIG. 5, the processing unit corresponding to the first consumer thread is moved to a processing unit cluster 200, to process data sent by a producer corresponding to a service A1.

In an example of this embodiment, refer to FIG. 6. The first consumer thread may be set as a consumer thread 124, and correspondingly, the processing unit corresponding to the first consumer thread is a processing unit 114. The second consumer thread may be further set as a consumer thread 123. Data sent by the producer 134 is originally processed by the consumer thread 124. When the processing unit corresponding to the consumer thread 124 satisfies the condition, the consumer thread 123 takes over, from the consumer thread 124, processing of the data sent by the producer 134. That is, when the processing unit corresponding to the consumer thread 124 satisfies the condition, the consumer thread 124 that originally processes the data sent by the producer 134 no longer processes the data sent by the producer 134, but the consumer thread 123 processes the data sent by the producer 134. The consumer thread 123 runs on a processing unit 113, and processing, by the consumer thread 123, the data sent by the producer 134 may also be referred to as processing, by the processing unit 113, the data sent by the producer 134.

In this way, different processing units can process data sent by a producer without involving thread switching between processing units, to avoid overheads caused by thread switching between different processing units.

The second consumer thread takes over, from the first consumer thread, processing of the data sent by the first producer, and the second consumer thread also processes data sent by another producer. As a result, the second consumer thread processes data sent by two or more producers, and a load of a processing unit in which the second consumer thread is located is heavy. Therefore, load balancing may be performed between processing units other than the processing unit corresponding to the first consumer thread among the N consumer threads.

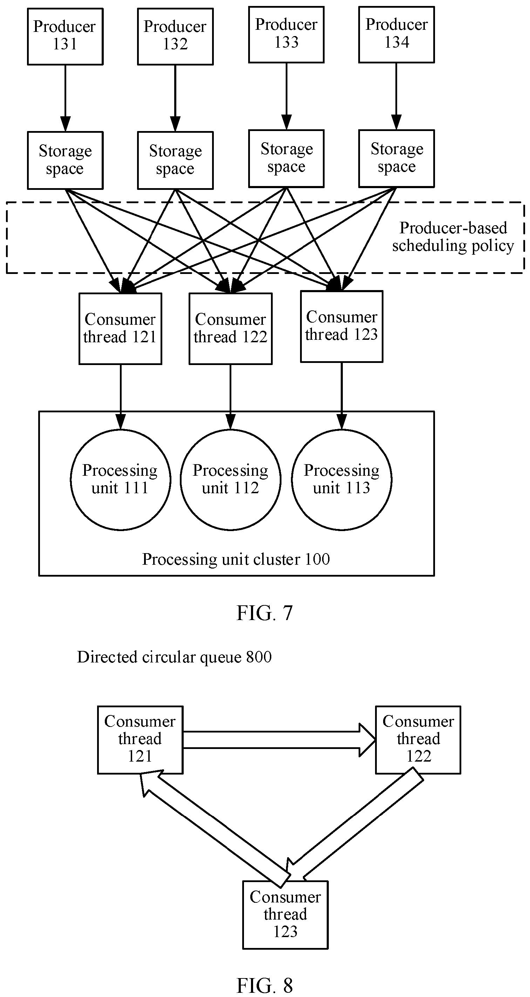

In this embodiment of this application, load balancing between processing units is a producer-based scheduling policy. That is, a consumer thread is scheduled to process data sent by a producer. As shown in FIG. 7, the producer continuously switches between consumer threads, to implement load balancing between the consumer threads. The consumer threads one-to-one correspond to processing units. Load balancing between the consumer threads is also load balancing between the processing units. Compared with scheduling a consumer thread between processing units in the related technology, the producer-based scheduling policy is a user-mode scheduling policy, and does not involve a kernel mode operation, to avoid large overheads of the kernel mode operation.

In an example, as described above, to ensure data processing consistency, data sent by one producer is processed by one consumer thread at a same moment. When processing the data sent by the producer, the consumer thread may apply a lock to the data sent by the producer, to prevent another consumer thread from processing the data sent by the producer. When a plurality of consumer threads simultaneously process data sent by a same producer, a lock conflict occurs. To avoid the lock conflict or prevent the plurality of consumer threads from simultaneously processing the data sent by the same producer, a directed circular queue mechanism is designed. This mechanism can effectively avoid lock conflicts. Details are as follows.

Refer to FIG. 8. It may be set that consumer threads other than the first consumer thread among the N consumer threads include a consumer thread 121, a consumer thread 122, and a consumer thread 123. The consumer thread 121, the consumer thread 122, and the consumer thread 123 form a directed circular queue 800 connected head-to-tail. It may be set that in the directed circular queue 800, a next consumer thread of the consumer thread 121 is the consumer thread 122, a next consumer thread of the consumer thread 122 is the consumer thread 123, and a next consumer thread of the consumer thread 123 is the consumer thread 121.

A load of a processing unit corresponding to a current consumer thread may be compared with a load of a processing unit corresponding to a next consumer thread of the current consumer thread in the directed circular queue 800. If the load of the processing unit corresponding to the current consumer thread is less than the load of the processing unit corresponding to the next consumer thread, and the next consumer thread processes data sent by at least two producers, the current consumer thread takes over, from the next consumer thread, processing of data sent by a part of the at least two producers. For example, the consumer thread 123 may be set to process data sent by a producer 133 and data sent by a producer 134. When a load of a processing unit 112 corresponding to the consumer thread 122 is less than a load of the processing unit 113 corresponding to the consumer thread 123, the consumer thread 122 takes over, from the consumer thread 123, processing of data sent by one of the producer 133 and the producer 134, and the consumer thread 123 continues processing data sent by the other of the producer 133 and the producer 134.

In this way, it can be ensured that a producer flows unidirectionally between consumer threads, to greatly reduce lock conflicts during switching of a consumer thread that processes data sent by a producer.

Loads of different processing units may be compared in the following two manners.

In one manner, loads of different processing units may be compared by using scheduling delays of the different processing units. The scheduling delay may also be referred to as execution waiting duration, and is duration from a moment at which a producer sends data to a moment at which the data is processed by a consumer thread on a processing unit. The processing unit 112 and the processing unit 113 are still used as an example. If one or more latest scheduling delays of the processing unit 112 are less than one or more latest scheduling delays of the processing unit 112, it may be determined that the load of the processing unit 112 is less than the load of the processing unit 113. In an example, the load of the processing unit 112 may be compared with the load of the processing unit 113 according to formula (1). $\left|{T}_{c}^{j}-{T}_{c}^{j + 1}\right| \geq Δ {T}_{diff _ max}$ (1) ${T}_{c}^{j}$ is latest k scheduling delays of a processing unit j (for example, the processing unit 112). ${T}_{c}^{j + 1}$ is latest k scheduling delays of a processing unit j+1 (for example, the processing unit 113). Δ*T*_{*diff*_*max*} is a constant, and is a maximum difference between latest k scheduling delays of different processing units, where k is an integer greater than or equal to 1, and k is a preset value.

In the other manner, as described above, a producer stores generated data in a storage space corresponding to the producer, and a consumer thread obtains the data from the storage space and processes the obtained data. If all data in a storage space corresponding to a current consumer thread has been processed, and no new data arrives, that is, the current consumer thread is in an idle state, it is determined that a load of a processing unit corresponding to the current consumer thread is less than a load of a processing unit corresponding to a next consumer thread of the current consumer thread in the directed circular queue 800.

In an example, the storage space corresponding to the producer may also be referred to as a queue. A queue steal (queue steal) mechanism may be enabled based on a partition tree (partition) structure to ensure a unidirectional flow between consumer threads of different queues, thereby ensuring a unidirectional flow between consumer threads of producers.

In some embodiments, when the first consumer thread is configured to process both the data sent by the first producer and data sent by a second producer among the M producers, the processing unit corresponding to the first consumer thread satisfying the condition includes: a load of the processing unit corresponding to the first consumer thread is greater than a load of a processing unit corresponding to the second consumer thread. That is, in this embodiment, the first consumer thread is configured to simultaneously process data sent by two or more producers. If the load of the processing unit corresponding to the first consumer thread is greater than the load of the processing unit corresponding to the second consumer thread, the second consumer thread may take over, from the first consumer thread, processing of data sent by a part of the two or more producers. The first producer is a part of the two or more producers. In addition, the first consumer thread continues processing data sent by a producer other than the first producer in the two or more producers.

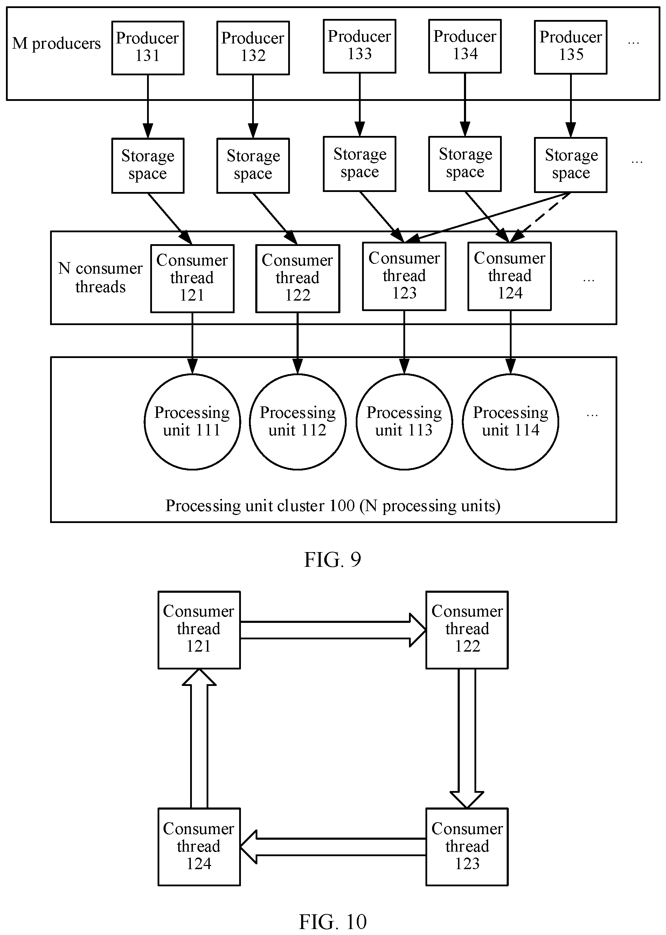

For example, refer to FIG. 9, the consumer thread 124 may be set to simultaneously execute the data sent by the producer 134 and the data sent by the producer 135. If a load of the processing unit 114 corresponding to the consumer thread 124 is greater than the load of the processing unit 113 corresponding to the consumer thread 123, the consumer thread 123 takes over, from the consumer thread 124, processing of data sent by one of the producer 134 and the producer 135, and the consumer thread 124 continues processing data sent by the other of the producer 134 and the producer 135.

In an example of this embodiment, the N consumer threads form a directed circular queue 900 connected head-to-tail. In the directed circular queue 900, the first consumer thread is a next consumer thread of the second consumer thread. In this example, a load of a processing unit corresponding to a current consumer thread may be compared with a load of a processing unit corresponding to a next consumer thread of the current consumer thread in the directed circular queue 900. If the load of the processing unit corresponding to the current consumer thread is less than the load of the processing unit corresponding to the next consumer thread, and the next consumer thread processes data sent by at least two producers, the current consumer thread takes over, from the next consumer thread, processing of data sent by a part of the at least two producers.

For example, it may be set that the N consumer threads include the consumer thread 121, the consumer thread 122, the consumer thread 123, and the consumer thread 124. As shown in FIG. 10, the consumer thread 121, the consumer thread 122, the consumer thread 123, and the consumer thread 124 form the directed circular queue 900 connected head-to-tail. It may be set that in the directed circular queue 900, a next consumer thread of the consumer thread 121 is the consumer thread 122, a next consumer thread of the consumer thread 122 is the consumer thread 123, a next consumer thread of the consumer thread 123 is the consumer thread 124, and a next consumer thread of the consumer thread 124 is the consumer thread 121. The consumer thread 124 may be set to simultaneously execute the data sent by the producer 134 and the data sent by the producer 135. If the load of the processing unit 114 corresponding to the consumer thread 124 is greater than the load of the processing unit 113 corresponding to the consumer thread 123, the consumer thread 123 takes over, from the consumer thread 124, processing of data sent by one of the producer 134 and the producer 135, and the consumer thread 124 continues processing data sent by the other of the producer 134 and the producer 135.

For a specific manner of comparing the loads, refer to the foregoing descriptions. Details are not described herein again.

In this way, it can be ensured that a producer flows unidirectionally between consumer threads, to greatly reduce lock conflicts during switching of a consumer thread that processes data sent by a producer.

In conclusion, in the data processing method provided in this embodiment of this application, a one-to-one correspondence is always maintained between consumer threads and processing units, and a thread is not switched between processing units. When producers and processing units are not in one-to-one correspondence, or when producers and consumer threads are not in one-to-one correspondence, a producer corresponding to a processing unit may be switched by switching a producer between consumer threads or switching a consumer thread between producers. In this way, load balancing between processing units can be implemented without a kernel mode operation, to avoid large overheads of the kernel mode operation and improve data processing performance.

In addition, in the data processing method provided in this embodiment of this application, a directed circular queue mechanism is used to ensure a unidirectional flow of a producer between consumer threads, to greatly reduce lock conflicts during switching of a producer between consumer threads.

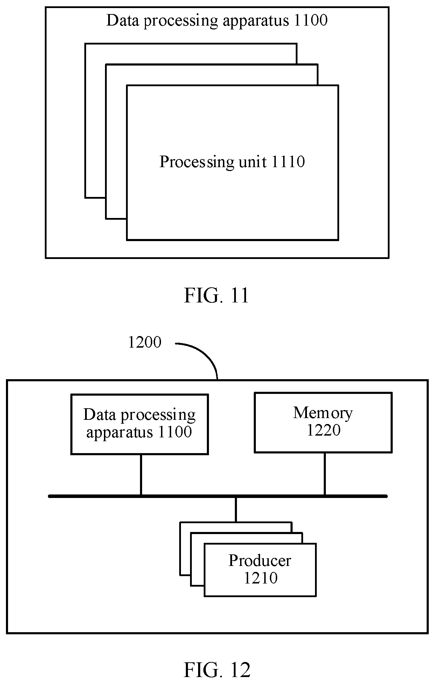

Refer to FIG. 11. An embodiment of this application further provides a data processing apparatus 1100. The apparatus 1100 includes N processing units 1110, where N is an integer greater than or equal to 1. The N processing units 1110 are in one-to-one correspondence with N consumer threads, and the consumer thread runs on a processing unit 1110 corresponding to the consumer thread.

A consumer thread among the N consumer threads is configured to process data sent by at least one of the M producers, where data sent by one producer is processed by one consumer thread, and M is an integer greater than or equal to N.

When a processing unit 1110 corresponding to a first consumer thread that processes data sent by a first producer among the M producers satisfies a condition, a second consumer thread among the N consumer threads is configured to take over, from the first consumer thread, processing of the data sent by the first producer.

In some embodiments, that the processing unit 1110 corresponding to the first consumer thread satisfies the condition includes any one of the following:
the processing unit 1110 corresponding to the first consumer thread is powered off, the processing unit 1110 corresponding to the first consumer thread is faulty, and the processing unit 1110 corresponding to the first consumer thread is configured to process data sent by a producer other than the M producers.

In an example of this embodiment, a consumer thread other than the first consumer thread among the N consumer threads forms a first directed circular queue. When a load of a processing unit 1110 corresponding to the second consumer thread is greater than a load of a processing unit 1110 corresponding to a third consumer thread, and the second consumer thread is configured to process data sent by at least two of the M producers, the third consumer thread is configured to take over, from the second consumer thread, processing of data sent by a part of the at least two producers, where in the first circular queue, the second consumer thread is a next consumer thread of the third consumer thread.

In some embodiments, the first consumer thread is configured to process both the data sent by the first producer and data sent by a second producer among the M producers, and that the processing unit 1110 corresponding to the first consumer thread satisfies the condition includes: a load of the processing unit 1110 corresponding to the first consumer thread is greater than a load of a processing unit 1110 corresponding to the second consumer thread.

In an example of this embodiment, the N consumer threads form a second directed circular queue, and in the second directed circular queue, the first consumer thread is a next consumer thread of the second consumer thread.

In some embodiments, a storage space corresponding to the producer is configured to store data sent by the producer, and the consumer thread is configured to: obtain data from a storage space corresponding to the at least one producer, and process the obtained data.

Refer to FIG. 12. An embodiment of this application provides a compute device 1200. As shown in FIG. 12, the compute device 120 includes a data processing apparatus 1100 shown in FIG. 11, M producers 1210, and a memory 1220. M is an integer greater than or equal to 1. The memory 1220 is configured to store an executable program. The processing unit in the data processing apparatus 1100 is configured to execute the executable program stored in the memory 1220, so that the compute device 1200 can perform the method shown in FIG. 5.

An embodiment of this application further provides a computer program product including instructions. The computer program product may be software or a program product that includes the instructions and that can run on a compute device or can be stored in any usable medium. When the computer program product runs on the compute device, the compute device is enabled to perform the method shown in FIG. 5.

Embodiments of this application further provide a computer-readable storage medium. The computer-readable storage medium may be any usable medium that can be stored by a compute device, or a data storage device, like a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the compute device to perform the method shown in FIG. 5.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A data processing method, applied to a data processing apparatus, wherein the apparatus comprises N processing units, N is an integer greater than or equal to 1, the N processing units are in one-to-one correspondence with N consumer threads, the consumer thread runs on a processing unit corresponding to the consumer thread, and the method comprises:
processing, by a consumer thread among the N consumer threads, data sent by at least one of M producers, wherein data sent by one producer is processed by one consumer thread, and M is an integer greater than or equal to N; and
when a processing unit corresponding to a first consumer thread that processes data sent by a first producer among the M producers satisfies a condition, taking over, by a second consumer thread among the N consumer threads from the first consumer thread, processing of the data sent by the first producer.

2. The method according to claim 1, wherein the processing unit corresponding to the first consumer thread satisfying the condition comprises any one of the following:
the processing unit corresponding to the first consumer thread is powered off, the processing unit corresponding to the first consumer thread is faulty, and the processing unit corresponding to the first consumer thread is configured to process data sent by a producer other than the M producers.

3. The method according to claim 2, wherein a consumer thread other than the first consumer thread among the N consumer threads forms a first directed circular queue, and the method further comprises:
when a load of a processing unit corresponding to the second consumer thread is greater than a load of a processing unit corresponding to a third consumer thread, and the second consumer thread is configured to process data sent by at least two of the M producers, taking over, by the third consumer thread from the second consumer thread, processing of data sent by a part of the at least two producers, wherein
in the first circular queue, the second consumer thread is a next consumer thread of the third consumer thread.

4. The method according to claim 1, wherein the first consumer thread is configured to process both the data sent by the first producer and data sent by a second producer among the M producers; and the processing unit corresponding to the first consumer thread satisfying the condition comprises: a load of the processing unit corresponding to the first consumer thread is greater than a load of a processing unit corresponding to the second consumer thread.

5. The method according to claim 4, wherein the N consumer threads form a second directed circular queue, and in the second directed circular queue, the first consumer thread is a next consumer thread of the second consumer thread.

6. The method according to any one of claims 1 to 5, wherein a storage space corresponding to the producer is configured to store data sent by the producer, and that the consumer thread processes data sent by at least one of the M producers comprises: the consumer thread obtains data from a storage space corresponding to the at least one producer, and processes the obtained data.

7. A data processing apparatus, wherein the apparatus comprises N processing units, N is an integer greater than or equal to 1, the N processing units are in one-to-one correspondence with N consumer threads, the consumer thread runs on a processing unit corresponding to the consumer thread;
a consumer thread among the N consumer threads is configured to process data sent by at least one of M producers, wherein data sent by one producer is processed by one consumer thread, and M is an integer greater than or equal to N; and
when a processing unit corresponding to a first consumer thread that processes data sent by a first producer among the M producers satisfies a condition, a second consumer thread among the N consumer threads is configured to take over, from the first consumer thread, processing of the data sent by the first producer.

8. The apparatus according to claim 7, wherein the processing unit corresponding to the first consumer thread satisfying the condition comprises any one of the following:
the processing unit corresponding to the first consumer thread is powered off, the processing unit corresponding to the first consumer thread is faulty, and the processing unit corresponding to the first consumer thread is configured to process data sent by a producer other than the M producers.

9. The apparatus according to claim 8, wherein a consumer thread other than the first consumer thread among the N consumer threads forms a first directed circular queue; and
when a load of a processing unit corresponding to the second consumer thread is greater than a load of a processing unit corresponding to a third consumer thread, and the second consumer thread is configured to process data sent by at least two of the M producers, the third consumer thread is configured to take over, from the second consumer thread, processing of data sent by a part of the at least two producers, wherein
in the first circular queue, the second consumer thread is a next consumer thread of the third consumer thread.

10. The apparatus according to claim 7, wherein the first consumer thread is configured to process both the data sent by the first producer and data sent by a second producer among the M producers; and the processing unit corresponding to the first consumer thread satisfying the condition comprises: a load of the processing unit corresponding to the first consumer thread is greater than a load of a processing unit corresponding to the second consumer thread.

11. The apparatus according to claim 10, wherein the N consumer threads form a second directed circular queue, and in the second directed circular queue, the first consumer thread is a next consumer thread of the second consumer thread.

12. The apparatus according to any one of claims 7 to 11, wherein a storage space corresponding to the producer is configured to store data sent by the producer, and the consumer thread is configured to: obtain data from a storage space corresponding to the at least one producer, and process the obtained data.

13. A compute device, comprising the data processing apparatus according to any one of claims 7 to 12 and M producers.

14. A computer-readable storage medium, comprising computer program instructions, wherein when the computer program instructions are executed by a compute device, the compute device performs the method according to any one of claims 1 to 7.
